# EUROPÄISCHE PATENTANMELDUNG

(11) **EP 1 577 773 A1**
(43) Veröffentlichungstag der Anmeldung: **21.09.2005**
(21) Anmeldenummer: 04006103.8
(22) Anmeldetag: 15.03.2004
(51) Int. Cl.: G06F 11/00, G06F 11/07

(54) **Multiprozessorsystem mit einem Diagnoseprozessor zur Sicherung des Systemzustands und Verfahren zum Betrieb eines Multiprozessorsystems**

(71) Anmelder: SIEMENS AKTIENGESELLSCHAFT, 80333 München (DE)
(72) Erfinder: Graf, René, Dr., 76135 Karlsruhe (DE)

(57) **Zusammenfassung**

Es wird ein Multiprozessorsystem (10,20) und ein Verfahren zu dessen Betrieb angegeben, wobei neben einer Mehrzahl von Arbeitsprozessoren (11,12) zumindest ein Diagnoseprozessor (13) vorgesehen ist. Diesen überwacht die Arbeitsprozessoren (11,12) und sichert im Fehlerfall einen Systemzustand entweder jedes Arbeitsprozessors (11,12) oder des Multiprozessorsystems (10,20).
Weiterhin wird ein redundantes Multiprozessorsystem angegeben, bestehend aus zwei durch eine Redundanzkopplung verbundenen Multiprozessorsystemen, welche jeweils den oben beschriebenen Diagnoseprozessor beinhalten.

## Beschreibung

Die Erfindung betrifft ein Verfahren zum Betrieb eines Mehr- oder Multiprozessorsystems. Die Erfindung betrifft darüber hinaus auch das nach dem Verfahren arbeitende Mehr- oder Multiprozessorsystem selbst. Die Erfindung bezieht sich vorzugsweise auf ein Multiprozessorsystem oder ein Verfahren zum Betrieb eines solchen Multiprozessorsystems, das zur Anwendung im Bereich der Automatisierung technischer Prozesse vorgesehen ist. Das Multiprozessorsystem ist dann als Automatisierungsgerät realisiert oder zumindest Bestandteil eines Automatisierungsgerätes.

Ein Mehr- oder Multiprozessorsystem zeichnet sich im Gegensatz zu einem Einzelprozessorsystem durch eine Mehrzahl von Verarbeitungseinheiten, also Prozessoren, ASICs oder dergleichen, im Folgenden zusammenfassend als Arbeitsprozessoren bezeichnet, aus. Die einzelnen Arbeitsprozessoren verarbeiten gleichzeitig einzelne unabhängige Steuerungsprogramme oder unabhängige Teile eines einzelnen Steuerungsprogramms, im Folgenden zusammenfassend ebenfalls als Steuerungsprogramm bezeichnet. Bei der Anwendung des Multiprozessorsystems zur Automatisierung technischer Prozesse handelt es sich bei dem oder jedem solchen Steuerungsprogramm um ein Programm, das zur Be- und Verarbeitung von Daten aus dem technischen Prozess und zur Ausgabe von Steuerungsbefehlen an den technischen Prozess, etwa zum Ein- oder Ausschalten einzelner Geräte, vorgesehen ist.

Das oder jedes Steuerungsprogramm ist in einem dem jeweiligen Arbeitsprozessor zugeordneten Arbeitsspeicherbereich abgelegt.

Falls bei einem der Arbeitsprozessoren ein Fehler, insbesondere ein Fehler beim Abarbeiten des jeweiligen Steuerungsprogramms, auftritt, der zu einem Systemstillstand führt, bleibt entweder das gesamte Multiprozessorsystem oder zumindest der von dem Fehler betroffene Arbeitsprozessor für Diagnosezwecke stehen, so dass in jedem Fall die Funktion des Gesamtsystems betroffen ist.

Eine Wiederaufnahme der Funktion ist erst nach Analyse des Fehlers sowie einem ggf. manuell auszulösenden Systemneustart (Wiederanlauf) möglich. Dadurch wird die Verfügbarkeit des Gesamtsystems deutlich verringert.

Zur Behandlung einer solchen Fehlersituation sind bisher zwei Verfahren mit jeweils spezifischen Nachteilen bekannt geworden.

Nach einem der Verfahren ist vorgesehen, dass das Multiprozessorsystem im Fehlerfall in eine Endlosschleife verzweigt und den Systemzustand damit quasi einfriert, da in der Endlosschleife keine Veränderungen an den Daten, die zu dem Fehler geführt haben, z. B. wesentlichen Daten des Prozessorkontexts und dem Inhalt des oder jedes Arbeitsspeichers, vorgenommen werden. Der auf diese Weise konservierte Systemzustand kann zu einem späteren Zeitpunkt analysiert werden, um die Ursache für die Fehlersituation zu ermitteln.

Ein weiterer Betrieb des Multiprozessorsystems, also auch der von der Fehlersituation nicht direkt betroffenen Arbeitsprozessoren, ist nicht möglich. Das "Einfrieren" des gesamten Systems ist erforderlich, weil Aktionen oder das Ausbleiben von Aktionen eines Arbeitsprozessors den Stillstand anderer Arbeitsprozessoren zur Folge haben können. Nach Beseitigung der Fehlersituation ist ein ggf. manuell auszulösender Neustart erforderlich. Während der Zeit zwischen Eintreten der Fehlersituation und Neustart ist das Multiprozessorsystem nicht verfügbar, so dass auch ein gesteuerter und/oder überwachter technischer Prozess während dieser Zeit unterbrochen ist.

Gemäß dem anderen Verfahren ist zur Erhöhung der Verfügbarkeit des Multiprozessorsystems vorgesehen, dass das System im Fehlerfall selbständig einen Neustart (booten) auslösen kann, um möglichst rasch den Produktivbetrieb wieder aufzunehmen. Die Verfügbarkeit des Multiprozessorsystems wird dabei zwar in gewünschter Weise erhöht, aber es gehen die Daten, die vor Eintreten der Fehlersituation vorgelegen haben und die voraussichtlich die Fehlersituation herbeigeführt haben, verloren, so dass eine spätere Analyse der Ursache der Fehlersituation unmöglich ist.

Bei speziellen Anwendungsfällen wird ein Steuerungssystem, also eine Kombination von Automatisierungsgeräten, zur Vermeidung von kritischen Situationen im gesteuerten und/oder überwachten technischen Prozess häufig redundant ausgeführt. Auch Multiprozessorsysteme können mit zwei oder mehr einzelnen Multiprozessorsystemen redundant ausgeführt sein. Ein Gesamtsystem mit redundanten Einzelsystemen oder Einzelgeräten wird als hochverfügbares System bezeichnet. Bei einer Fehlersituation in einem der Systeme übernimmt das redundante System die Aufgaben des ausgefallenen Systems. Das ausgefallene System kann hinsichtlich seiner Daten "eingefroren" werden, so dass diese für eine spätere Analyse der Ursache der Fehlersituation zur Verfügung stehen. Während des Stillstands des ausgefallenen Systems ist allerdings die eigentlich beabsichtigte Hochverfügbarkeit nicht gegeben. Des Weiteren kann in einer Fehlersituation der Systemzustand des fehlerfreien Systems nicht gesichert werden, der eventuell zur Analyse der Ursache der Fehlersituation ebenfalls wichtig ist.

Der Erfindung liegt die Aufgabe zugrunde, ein Multiprozessorsystem sowie ein Verfahren zu dessen Betrieb anzugeben, mit dem sich einzelne oder alle oben genannten Nachteile vermeiden oder hinsichtlich ihrer Auswirkungen zumindest reduzieren lassen.

Diese Aufgabe wird erfindungsgemäß mit den Merkmalen des Anspruchs 1 gelöst. Dazu ist bei einem Multiprozessorsystem mit mindestens einem ersten und einem zweiten Arbeitsprozessor vorgesehen, dass mit dem Multiprozessorsystem mindestens ein Diagnoseprozessor kommunikativ verbunden ist, wobei der Diagnoseprozessor zur Sicherung des Systemzustands des Multiprozessorsystems geeignet und vorgesehen ist. Bei einem solchen Multiprozessorsystem handelt es sich bevorzugt um das Multiprozessorsystem eines Automatisierungsgerätes, also z. B. um eine Zentraleinheit einer speicherprogrammierbaren Steuerung, um einen zum Einsatz in Industrieumgebungen vorgesehenen Industrierechner oder dergleichen. Der oder jeder eigentliche Arbeitsprozessor wird also von Vorgängen im Zusammenhang mit einer evtl. Diagnose vollständig oder zumindest nahezu vollständig entlastet.

Die oben genannte Aufgabe wird entsprechend auch mit einem korrespondierenden Verfahren gelöst. Dazu ist bei einem Verfahren zum Betrieb eines Multiprozessorsystems der oben genannten Art vorgesehen, dass das Multiprozessorsystem kommunikativ mit einem Diagnoseprozessor verbunden ist und dass der Diagnoseprozessor bei einem Fehler des Multiprozessorsystems den Systemzustand des Multiprozessorsystems sichert.

Die Erfindung geht von der Erkenntnis aus, dass nur ein zusätzlicher Prozessor, nämlich der Diagnoseprozessor, der exklusiv für die Behandlung von Aufgaben im Zusammenhang mit der Diagnose des jeweiligen Multiprozessorsystems vorgesehen ist, geeignet ist, sämtliche denkbaren Fehlersituationen zu handhaben. Der Diagnoseprozessor läuft unabhängig von den Arbeitsprozessoren und ist daher zu jedem Zeitpunkt in der Lage, diese zu überwachen. Bei einer Fehlersituation bei einem oder mehreren Arbeitsprozessoren kann der Diagnoseprozessor vorgegebene oder vorgebbare Maßnahmen einleiten. Eine Fehlersituation erkennt der Diagnoseprozessor aufgrund der kommunikativen Verbindung mit dem jeweiligen Multiprozessorsystem. So kann z. B. vorgesehen sein, dass das Multiprozessorsystem eine Art "Lebenszeichen" abgibt, indem z. B. kontinuierlich der Inhalt einer bestimmten Speicherstelle umgeschaltet wird. Der Diagnoseprozessor überwacht ein solches Lebenszeichen und leitet bei Ausbleiben des Lebenszeichens sofort die jeweils vorgesehenen Maßnahmen ein.

Der Vorteil der Erfindung besteht in der entkoppelten Struktur des Gesamtsystems, nämlich der Arbeitsprozessoren einerseits und des Diagnoseprozessors andererseits, bei der ein Fehler bei einem oder mehreren Arbeitsprozessoren die Funktion des Diagnoseprozessors nicht betrifft, so dass dieser die zur Diagnose der Fehlersituation benötigten Daten, also den Systemzustand des Multiprozessorsystems, beschaffen kann, während dieses angehalten (eingefroren) ist. Diese Diagnosedaten stehen dann für eine spätere Auswertung zur Verfügung.

Die abhängigen Ansprüche sind auf bevorzugte Ausführungsformen der vorliegenden Erfindung gerichtet.

Bevorzugt ist zur kommunikativen Verbindung von Multiprozessorsystem und Diagnoseprozessor der Diagnoseprozessor mit jedem Arbeitsprozessor kommunikativ verbunden, so dass der Diagnoseprozessor auf die einzelnen Arbeitsprozessoren und speziell den diesen jeweils zugeordneten Arbeitsspeicher direkt zugreifen kann. Dies ist bei einer Fehlersituation, die nicht nur einzelne oder mehrere Arbeitsprozessoren, sondern auch etwaige Peripherie betrifft, die einzige Möglichkeit, bei der der Diagnoseprozessor immer noch auf die Arbeitsprozessoren Zugriff hat.

Bevorzugt umfasst die Sicherung des Systemzustands des Multiprozessorsystems eine Sicherung des Prozessorkontexts jedes Arbeitsprozessors. Der Prozessorkontext umfasst alle Informationen, also insbesondere Inhalte der prozessoreigenen Register, die das Verhalten und die Arbeitsweise des Arbeitsprozessors im Zeitpunkt des Auftretens der Fehlersituation beeinflussen. Durch das Wiederherstellen des gesicherten Prozessorkontexts zu einem späteren Zeitpunkt kann die Situation, die bei Eintreten des Fehlers vorgelegen hat, für Diagnosezwecke wieder hergestellt werden. Optional umfasst die Sicherung des Systemzustands des Multiprozessorsystems auch eine Sicherung des Inhalts des Arbeitsspeichers des betroffenen oder sämtlicher Arbeitsprozessoren. Auf diese Weise kann zu einem späteren Zeitpunkt eine Fehlersituation erkannt werden, die aufgrund der Verarbeitung fehlerhafter Daten, nämlich Inhalten des Arbeitsspeichers, eingetreten ist, z. B. durch das Ziehen einer Wurzel aus einer negativen Zahl oder dergleichen.

Wenn mit einem ersten und einem zweiten Multiprozessorsystem der oben genannten Art ein redundantes Multiprozessorsystem gebildet wird, sind beide Multiprozessorsysteme bevorzugt mittels einer Redundanzkopplung kommunikativ verbunden, so dass sie untereinander Daten austauschen können, die zur gegenseitigen Synchronisation erforderlich sind und die damit den eigentlichen Redundanzbetrieb, also die jederzeitige Möglichkeit, dass eines der Multiprozessorsysteme die Aufgaben des anderen, ausgefallenen Multiprozessorsystems übernimmt, erst ermöglichen. Ein solcher Redundanzbetrieb ist besonders bei der Steuerung und/oder Überwachung (kritischer) technischer Prozesse, z. B. chemischer Prozesse, von besonderem Interesse, so dass solche redundanten Multiprozessorsysteme besonders bevorzugt in Form eines redundanten Automatisierungsgerätes mit einem ersten und einem zweiten solchen Multiprozessorsystem ausgeführt werden.

Wenn der Systemzustand oder der oder jeder Prozessorkontext des jeweiligen Multiprozessorsystems durch einen Zugriff auf den jeweiligen Diagnoseprozessor auslesbar ist, können die vom Diagnoseprozessor gesicherten Daten auch an einem entfernten Ort zwischengespeichert und/oder analysiert werden. Als entfernter Ort kommt dabei z. B. eine Leitwarte mit einem Leitwartenrechner, also eine dem Multiprozessorsystem hierarchisch übergeordnete Einheit, in Betracht. Von dieser Leitwarte aus können auch automatisch oder durch einen Benutzereingriff Maßnahmen zur Beseitigung der Fehlersituation eingeleitet werden. Schließlich ist möglich, dass mittels des Leitwartenrechners die vom Diagnoserechner aufgenommenen Daten an ein weiteres redundantes Multiprozessorsystem übertragen werden, das das fehlerhafte Multiprozessorsystem nachbildet, aber nicht mit dem technischen Prozess verbunden ist, so dass erweiterte Möglichkeiten zur Fehlersuche, etwa auch durch einen Programmierer, genutzt werden können. Das weitere redundante Multiprozessorsystem muss sich nicht notwendig am Ort der Leitwarte oder des fehlerhaften Multiprozessorsystems befinden, sondern kann auch in den Räumen eines Automatisierungsdienstleisters aufgebaut sein, wobei die Übermittlung der vom Diagnoserechner gesammelten Daten per Datenfernübertragung, z. B. über Internet, erfolgt.

Bei einer Fehlersituation bei mindestens einem der Arbeitsprozessoren des redundanten Multiprozessorsystems ist bevorzugt als Verfahren zu dessen Betrieb vorgesehen, dass bei einem Fehler in einem der Multiprozessorsysteme, also dem fehlerhaften Multiprozessorsystem, dessen Diagnoseprozessor den Systemzustand sichert und dann einen Fehlersuchbetrieb aktiviert, wobei das fehlerhafte Multiprozessorsystem neu gestartet wird, wenn im Fehlersuchbetrieb kein Hardwarefehler erkannt wurde. Dieses Verfahren gewährleistet, dass das fehlerhafte Multiprozessorsystem möglichst schnell nach Eintritt der Fehlersituation wieder in Betrieb geht, so dass der Redundanzbetrieb und damit die Hochverfügbarkeit nur kurz unterbrochen ist. Es hat sich nämlich gezeigt, dass nach einem Neustart häufig ungünstige Konstellationen, die zu einer Fehlersituation führen können, beseitigt sind, sofern nicht ein Hardwarefehler zu der Fehlersituation geführt hat. Dies wird im Fehlersuchbetrieb aber überprüft, so dass der Neustart nur dann erfolgt, wenn Aussicht besteht, dass die Fehlersituation durch den Neustart beseitigt ist.

Das soeben beschriebene Verfahren kann vorteilhaft dahin gehend ergänzt sein, dass nicht nur der Diagnoseprozessor des fehlerhaften Multiprozessorsystems den jeweiligen Systemzustand sichert, sondern dass alle Diagnoseprozessoren den jeweiligen Systemzustand sichern. Auf diese Weise wird der Systemzustand des redundanten Gesamtsystems aufgezeichnet, so dass zu einem späteren Zeitpunkt auch Fehlersituationen erkannt und untersucht werden können, die sich nur aufgrund einer besonderen, beide redundanten Multiprozessorsysteme wechselseitig beeinflussenden Konstellation ergeben haben.

Für den Fall eines automatisch auslösbaren Neustarts des fehlerhaften Multiprozessorsystems ist bevorzugt vorgesehen, dass sich das fehlerhafte Multiprozessorsystem nach einem solchen Neustart über die Redundanzkopplung mit dem anderen, als dem fehlerfreien Multiprozessorsystem synchronisiert und damit den Redundanzbetrieb wieder aufnimmt.

Zur Signalisierung des Redundanzverlusts, also des Zustands, bei dem keine Hochverfügbarkeit gegeben ist, ist vorgesehen, dass das fehlerfreie Multiprozessorsystem eine Meldung über den Redundanzverlust an eine übergeordnete Einheit, insbesondere einen Leitwartenrechner, absetzt. Dies kann über den Diagnoseprozessor des fehlerfreien Multiprozessorsystems erfolgen. Alternativ ist auch denkbar, dass der Diagnoseprozessor des fehlerhaften Multiprozessorsystems eine solche Meldung absetzt. Gemäß einer weiteren günstigen Ausgestaltung ist vorgesehen, dass eine solche Meldung nur abgesetzt wird, wenn die Dauer des Redundanzverlusts eine vorgegebene oder vorgebbare Zeitspanne übersteigt. Eine solche Meldung kann nämlich unnötig sein, wenn nach einem Neustart des fehlerhaften Multiprozessorsystems der Redundanzbetrieb unmittelbar wieder aufgenommen werden kann. Der Nutzen einer solchen Meldung ist evident. Aufgrund einer solchen Meldung wird ggf. Servicepersonal zur Wartung des redundanten Multiprozessorsystems veranlasst. Alternativ ist auch möglich, dass der jeweils überwachte oder gesteuerte technische Prozess bei Redundanzverlust in einen sicheren Zustand überführt wird.

Um solche Maßnahmen oder erweiterten Eingriffs- und Beeinflussungsmöglichkeiten bewirken zu können, ist vorgesehen, dass der Leitwartenrechner über eine kommunikative Verbindung zum redundanten Multiprozessorsystem auf den oder jeden Diagnoseprozessor zugreifen kann, um den Systemzustand des oder jedes Multiprozessorsystems auszulesen.

Nachfolgend wird ein Ausführungsbeispiel der Erfindung anhand der Zeichnung näher erläutert. Einander entsprechende Gegenstände der Elemente sind in allen Figuren mit den gleichen Bezugszeichen versehen.

Darin zeigen:
- FIG 1: ein Multiprozessorsystem,
- FIG 2: ein redundantes Multiprozessorsystem,
- FIG 3: eine schematische Darstellung der durch die einzelnen Prozessoren des Multiprozessorsystems ausgeführten Programme und
- FIG 4: einen Leitwartenrechner als dem redundanten Multiprozessorsystem hierarchisch übergeordnete Einheit zusammen mit dem redundanten Multiprozessorsystem.

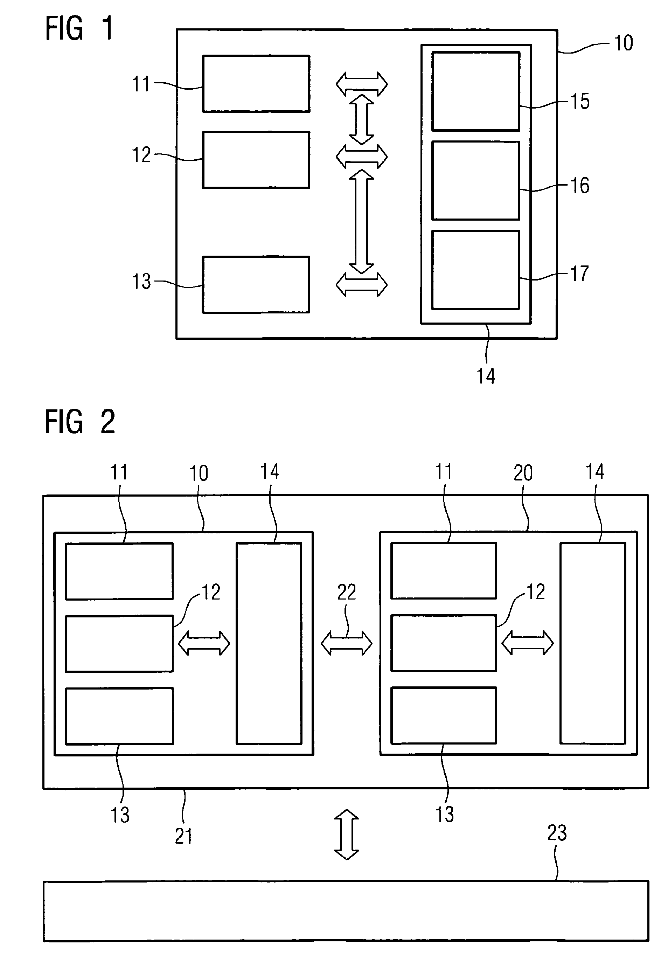

FIG 1 zeigt ein Multiprozessorsystem 10 mit einer Mehrzahl von Prozessoren, nämlich einem ersten und zweiten Arbeitsprozessor 11, 12. Darüber hinaus umfasst das Multiprozessorsystem 10 einen weiteren Prozessor, nämlich einen Diagnoseprozessor 13. Die Prozessoren 11, 12, 13 haben Zugriff auf einen Speicher 14 des Multiprozessorsystems 10. Dieser Speicher 14 ist in Form einzelner Speicherbereiche 15, 16, 17, nämlich einem ersten Arbeitsspeicherbereich 15, einem zweiten Arbeitsspeicherbereich 16 sowie einem Diagnoseprozessorspeicherbereich 17, organisiert. Jedem Prozessor 11 bis 13 ist also ein eigener Speicherbereich 15 bis 17 zugeordnet. Anstelle eines Speichers 14 mit einer auf die Anzahl der Prozessoren 11 bis 13 abgestimmten Anzahl Speicherbereiche 15 bis 17 kann das Multiprozessorsystem 10 auch eine auf die Anzahl der Prozessoren 11 bis 13 abgestimmte Anzahl separater Speicher umfassen.

Wie durch die Blockpfeile dargestellt, besteht zwischen den Prozessoren 11 bis 13 untereinander und den Prozessoren 11 bis 13 und dem Speicher 14 eine kommunikative Verbindung. Die kommunikative Verbindung ermöglicht zumindest eine Kommunikation zwischen den beiden Arbeitsprozessoren 11, 12, z. B. zum Zwecke des Datenaustausches und zur Synchronisation. Des Weiteren ermöglicht die kommunikative Verbindung eine Kommunikation vom Diagnoseprozessor 13 mit jedem Arbeitsprozessor 11, 12, um z. B. Aufschluss über dessen Status, insbesondere also eine evtl. Fehlersituation, zu erhalten. Schließlich ermöglicht die kommunikative Verbindung für jeden Prozessor 11 bis 13 einen Zugriff auf den ihm jeweils zugeordneten Speicherbereich 15 bis 17. Darüber hinaus kann auch vorgesehen sein, dass jeder Arbeitsprozessor 11, 12 neben seinem eigenen Speicherbereich 15, 16 auch auf den Speicherbereich 15, 16 des jeweils anderen Arbeitsprozessors 11, 12 zugreifen kann. Der Diagnoseprozessor 13 hat aufgrund der kommunikativen Verbindung zum Speicher 14 Zugriff auf die Speicherbereiche 15, 16 der Arbeitsprozessoren 11, 12 und auf den eigenen Speicherbereich, den Diagnoseprozessorspeicherbereich 17.

FIG 2 zeigt das in seiner graphischen Darstellung aus Gründen der Übersichtlichkeit reduzierte Multiprozessorsystem 10 aus FIG 1, das zusammen mit einem weiteren, funktional dem Multiprozessorsystem 10 entsprechenden Multiprozessorsystem 20 ein redundantes Multiprozessorsystem 21 bildet.

Beide Multiprozessorsysteme 10, 20 sind über eine durch einen Blockpfeil nur angedeutete Redundanzkopplung 22 kommunikativ verbunden. Über diese Redundanzkopplung 22 wird der zur Gewährleistung der Redundanz und der damit einhergehenden Hochverfügbarkeit des Gesamtsystems, des redundanten Multiprozessorsystems 21, erforderliche Datenaustausch in an sich bekannter Weise abgewickelt.

Bei den Multiprozessorsystemen 10, 20 handelt es sich z. B. jeweils um eine Zentraleinheit einer speicherprogrammierbaren Steuerung mit mindestens zwei Arbeitsprozessoren 11, 12 und einem Diagnoseprozessor 13. Das redundante Multiprozessorsystem 21 ergibt sich dann z. B. durch die Zusammenschaltung zweier solcher Zentraleinheiten, was aufgrund der üblichen modularen Bauweise dieser Geräte und der Anschließbarkeit an einen Systembus leicht möglich ist. Ein solches redundantes Multiprozessorsystem 21 wird bevorzugt zur Steuerung und/oder Überwachung technischer Prozesse eingesetzt, wobei als technischer Prozess grundsätzlich jeder automatisierbare technische Prozess 23, also z. B. Produktionsprozesse zur Herstellung von Waren und Gütern, chemische Prozesse, Energieerzeugung, Abfallbehandlung und -verwertung, etc., in Betracht kommt. Der jeweils gesteuerte oder überwachte technische Prozess 23 ist entsprechend auch nur stilisiert dargestellt.

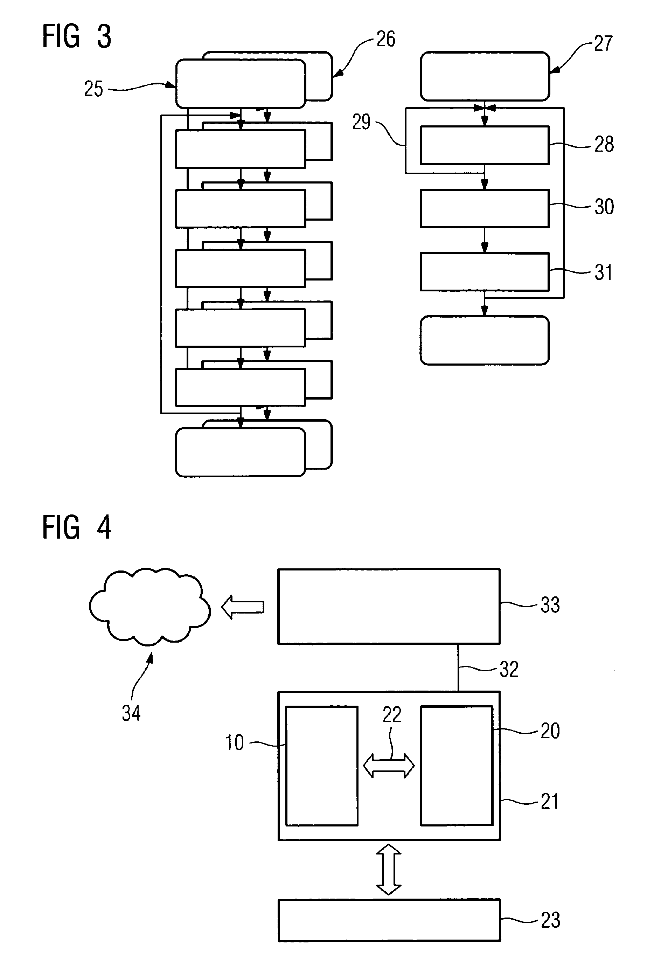

FIG 3 zeigt eine schematische Darstellung zur Verdeutlichung der Grundzüge des Betriebsverfahrens des redundanten Multiprozessorsystems 21 gemäß der Erfindung. Jeder Arbeitsprozessor 11, 12 jedes Multiprozessorsystems 10, 20 führt ein in seinem Arbeitsspeicherbereich 15, 16 gespeichertes Steuerungsprogramm 25, 26 aus, das in FIG 3 durch ein einfaches Flussdiagramm dargestellt ist. Der Diagnoseprozessor 13 jedes Multiprozessorsystems 10, 20 führt ein eigenes Steuerungsprogramm, ein Diagnoseprogramm 27, aus, das im Diagnoseprozessorspeicherbereich 17 gespeichert ist. Das Diagnoseprogramm 27 ist zur Überwachung der im gleichen Multiprozessorsystem 10, 20 vorhandenen Arbeitsprozessoren 11, 12 vorgesehen. Darum enthält das Diagnoseprogramm 27 eine erste Folge von Anweisungen 28, mit denen quasi in einer Endlosschleife 29 eine Überwachung der jeweiligen Arbeitsprozessoren 11, 12 erfolgt. Diese Endlosschleife 29 wird nur unterbrochen, wenn für zumindest einen der Arbeitsprozessoren 11, 12 mittels der Anweisungen 28 eine Fehlersituation, z. B. ein Ausbleiben eines "Lebenszeichens", erkannt wurde. Dann wird mit ersten weiteren Anweisungen 30, die Bestandteil des Diagnoseprogramms 27 sind, eine Sicherung des Systemzustands der jeweiligen Arbeitsprozessoren veranlasst. Zur Sicherung des Systemzustands ist insbesondere vorgesehen, dass beide Arbeitsprozessoren während der Sicherung angehalten werden.

Der Systemzustand ist dabei ein Datensatz oder eine Datenfolge, die den momentanen Status eines Arbeitsprozessors 11, 12 darstellt. Er umfasst vorzugsweise den gesamten so genannten Prozessorkontext, also die Inhalte der prozessoreigenen Register, sowie ggf. den Inhalt des dem Arbeitsprozessor 11, 12 zugeordneten Datenspeichers oder vorgegebene oder vorgebbare Ausschnitte davon. Als Datenspeicher wird dabei ein Teil des Arbeitsspeicherbereichs 15, 16 verstanden, insbesondere der Teil des Arbeitsspeicherbereichs 15, 16, der nicht zur Speicherung des jeweiligen Steuerungsprogramms 25, 26 verwendet wird und darum nur Daten enthält, die das Steuerungsprogramm 25, 26 im laufenden Betrieb be- oder verarbeitet.

Im Anschluss an die Sicherung des Systemzustands wird mit zweiten weiteren Anweisungen 31 für das von der Fehlersituation nicht betroffene Multiprozessorsystem 10, 20 die Fortsetzung des Betriebs veranlasst. Für das von der Fehlersituation betroffene Multiprozessorsystem 10, 20 wird ein Fehlersuchbetrieb aktiviert, der entweder als separat aufrufbares Unterprogramm auf dem jeweiligen Arbeitsprozessor 11, 12 oder als separat aufrufbares Unterprogramm auf dem Diagnoseprozessor 13 realisiert sein kann. Der Fehlersuchbetrieb liefert als Ergebnis zumindest eine Information dahin gehend, ob als Ursache für die Fehlersituation ein Hardwarefehler in Betracht kommt. Wird ein solcher Hardwarefehler als Ergebnis des Fehlersuchbetriebs ausgeschlossen, wird das von der Fehlersituation betroffene Multiprozessorsystem 10, 20 neu gestartet. Dieser Neustart (booten) kann auch Bestandteil des Fehlersuchbetriebs sein, muss also nicht notwendig im Rahmen der zweiten weiteren Anweisungen 31 realisiert sein. Nach Abarbeitung der zweiten weiteren Anweisungen 31 verzweigt das Diagnoseprogramm 27 wieder zur kontinuierlichen Überwachung der Arbeitsprozessoren 11, 12.

Wenn bei einer Fehlersituation nicht nur die Sicherung des Systemzustands des von der Fehlersituation betroffenen Multiprozessorsystems 10, 20, sondern auch der Systemzustand des komplementären Multiprozessorsystems 10, 20 gesichert werden soll, tauschen die auf beiden Multiprozessorsystemen 10, 20 durch den jeweiligen Diagnoseprozessor 13 ausgeführten Diagnoseprogramme 27 über die Redundanzkopplung 22 in dieser Hinsicht Daten aus, um auch bei dem nicht von der Fehlersituation betroffenen Multiprozessorsystem 10, 20 die gewünschte Sicherung des Systemzustands mit zeitweiligem Anhalten der jeweiligen Arbeitsprozessoren 11, 12 während dieser Sicherung zu veranlassen.

Der gesicherte Systemzustand wird im Diagnoseprozessorspeicherbereich 17 abgelegt. Gemäß einer vorteilhaften Ausgestaltung kann vorgesehen sein, dass der gesicherte Systemzustand oder eine Meldung über die Fehlersituation und den Verlust der Hochverfügbarkeit über eine Datenleitung 32 an einen an zentraler Stelle im technischen Prozess 23, beispielsweise einer Leitwarte, angeordneten Leitwartenrechner 33 übermittelt wird. Dies ist in FIG 4 dargestellt. Von hier aus können entweder automatisch oder durch Benutzereingriff weitere Maßnahmen veranlasst werden. Wenn der Leitwartenrechner 33 Zugriff auf das Internet 34 hat, können die als Systemzustand gesicherten Daten auch an externe Dienstleister, beispielsweise den Lieferanten der Steuerungshardware, also insbesondere des redundanten Multiprozessorsystems 21, oder den Lieferanten der Steuerungsprogramme 25, 26, zur Analyse der Fehlersituation übermittelt werden.

### Damit lässt sich die Erfindung kurz wie folgt darstellen:

Es wird ein Multiprozessorsystem 10, 20 angegeben, das neben einer Mehrzahl von Arbeitsprozessoren 11, 12 zumindest einen Diagnoseprozessor 13 aufweist, der zur Überwachung der Arbeitsprozessoren 11, 12 und im Fehlerfall zur Sicherung eines Systemzustands entweder jedes Arbeitsprozessors 11, 12 oder des Multiprozessorsystems 10, 20 vorgesehen ist. Wenn zwei oder mehrere solcher Multiprozessorsysteme 10, 20 zu einem redundanten Multiprozessorsystem 21 zusammengeschlossen sind, kann jeder Diagnoseprozessor 13 den Systemzustand des eigenen Multiprozessorsystems 10, 20 sichern, so dass im Fehlerfall ein Systemzustand des übergeordneten Gesamtsystems, nämlich des redundanten Multiprozessorsystems 21, für eine spätere Auswertung zur Verfügung steht. Die eigentliche Sicherung des Systemzustands benötigt nur wenig Zeit und ist stets möglich, da vorausgesetzt wird, dass der Diagnoseprozessor 13 von der jeweiligen Fehlersituation nicht betroffen ist. Nach der Sicherung können alle Arbeitsprozessoren 11, 12 oder alle beteiligten Systeme 10, 20 den Betrieb wieder aufnehmen. Die Analyse der bei der Sicherung gewonnenen Daten kann offline, also ohne weitere Betriebsbeeinträchtigung, erfolgen.

## Patentansprüche

1. Multiprozessorsystem (10), insbesondere Automatisierungsgerät mit einem Multiprozessorsystem (10), mit mindestens einem ersten und einem zweiten Arbeitsprozessor (11, 12), **gekennzeichnet durch** mindestens einen mit dem Multiprozessorsystem (10) kommunikativ verbundenen Diagnoseprozessor (13), wobei der Diagnoseprozessor (13) zur Sicherung des Systemzustands des Multiprozessorsystems (10) geeignet und vorgesehen ist.

2. Multiprozessorsystem nach Anspruch 1, wobei zur kommunikativen Verbindung von Multiprozessorsystem (10) und Diagnoseprozessor (13) der Diagnoseprozessor (13) mit jedem Arbeitsprozessor (11, 12) kommunikativ verbunden ist.

3. Multiprozessorsystem nach Anspruch 1 oder 2, wobei die Sicherung des Systemzustands des Multiprozessorsystems (10) eine Sicherung des Prozessorkontexts jedes Arbeitsprozessors (11, 12) umfasst.

4. Verfahren zum Betrieb eines Multiprozessorsystems (10), insbesondere eines Automatisierungsgerätes mit einem Multiprozessorsystem (10), mit mindestens einem ersten und einem zweiten Arbeitsprozessor (11, 12), **dadurch gekennzeichnet, dass** das Multiprozessorsystem (10) kommunikativ mit einem Diagnoseprozessor (13) verbunden ist und
dass der Diagnoseprozessor (13) bei einem Fehler des Multiprozessorsystems (10) den Systemzustand des Multiprozessorsystems (10) sichert.

5. Verfahren zum Betrieb eines Multiprozessorsystems nach Anspruch 4, wobei die kommunikative Verbindung von Multiprozessorsystem (10) und Diagnoseprozessor (13) als kommunikative Verbindung zwischen dem Diagnoseprozessor (13) und jedem Arbeitsprozessor (11, 12) realisiert ist.

6. Multiprozessorsystem nach Anspruch 3 oder 4, wobei zur Sicherung des Systemzustands des Multiprozessorsystems (10) eine Sicherung des Prozessorkontexts jedes Arbeitsprozessors (11, 12) erfolgt.

7. Redundantes Multiprozessorsystem mit einem ersten und einem zweiten Multiprozessorsystem (10) jeweils nach einem der Ansprüche 1, 2 oder 3, insbesondere redundantes Automatisierungsgerät mit einem ersten und einem zweiten solchen Multiprozessorsystem (10), wobei erstes und zweites Multiprozessorsystem untereinander mittels einer Redundanzkopplung (22) kommunikativ verbunden sind.

8. Redundantes Multiprozessorsystem nach Anspruch 7, wobei der Systemzustand oder der oder jeder Prozessorkontext des jeweiligen Multiprozessorsystems (10, 20) durch einen Zugriff auf den jeweiligen Diagnoseprozessor (13) auslesbar ist.

9. Verfahren zum Betrieb eines redundanten Multiprozessorsystems nach Anspruch 7 oder 8, wobei bei einem Fehler in einem der Multiprozessorsysteme (10, 20) - fehlerhaftes Multiprozessorsystem (10) - dessen Diagnoseprozessor (13) den Systemzustand sichert und dann einen Fehlersuchbetrieb aktiviert, wobei das fehlerhafte Multiprozessorsystem (10) neu gestartet wird, wenn im Fehlersuchbetrieb kein Hardwarefehler erkannt wurde.

10. Verfahren zum Betrieb eines redundanten Multiprozessorsystems nach Anspruch 7 oder 8, wobei bei einem Fehler in einem der Multiprozessorsysteme (10, 20) - fehlerhaftes Multiprozessorsystem (10) - der Diagnoseprozessor (13) jedes Multiprozessorsystems (10, 20) den jeweiligen Systemzustand sichert, wobei für fehlerhaftes Multiprozessorsystem (10) dann ein Fehlersuchbetrieb aktiviert wird und wobei das fehlerhafte Multiprozessorsystem (10) neu gestartet wird, wenn im Fehlersuchbetrieb kein Hardwarefehler erkannt wurde.

11. Verfahren nach Anspruch 9 oder 10, wobei sich das fehlerhafte Multiprozessorsystem (10) nach dem Neustart über die Redundanzkopplung (22) mit dem anderen, fehlerfreien Multiprozessorsystem (10) synchronisiert und damit den Redundanzbetrieb wieder aufnimmt.

12. Verfahren nach Anspruch 9, 10 oder 11, wobei das andere, fehlerfreie Multiprozessorsystem (10) eine Meldung über den Redundanzverlust an eine übergeordnete Einheit, insbesondere einen Leitwartenrechner (33), absetzt.

13. Verfahren nach Anspruch 12, wobei der Leitwartenrechner (33) über eine kommunikative Verbindung zum redundanten Multiprozessorsystem (10) auf den oder jeden Diagnoseprozessor (13) zugreift, um den Systemzustand des oder jedes Multiprozessorsystems (10, 20) auszulesen.
